# EUROPEAN PATENT APPLICATION

(11) **EP 3 100 931 A1**
(43) Date of publication of application: **07.12.2016**
(21) Application number: 16001216.7
(22) Date of filing: 30.05.2016
(51) Int. Cl.: B62B 9/08, B60T 11/06, B62B 5/04

(54) **BRAKE BALANCER FOR A STROLLER**

(30) Priority: 01.06.2015 US 201562168986 P
(71) Applicant: Britax Child Safety Inc., Fort Mill, SC 29708 (US)
(72) Inventor: Strauss, Ralf, Stanley, 28164 (US)
(74) Representative: Bosch Jehle Patentanwaltsgesellschaft mbH

(57) **Abstract**

A brake system for applying frictional braking to a mobility assembly of a stroller (10) may include a first brake assembly (120), a second brake assembly (130), an operator (72) and a brake balancer (70). The first brake assembly (120) may be operably coupled to a first wheel (100) of the mobility assembly and to a first cable (60). The second brake assembly (130) may be operably coupled to a second wheel (110) of the mobility assembly and to a second cable (62). The operator (72) may be configured to be actuated by a user to apply tension to a third cable (74). The brake balancer (70) may be operably coupled to the first and second brake assemblies (120, 130) and to the operator (72) via the first, second and third cables (60, 62, 74), respectively. The brake balancer (70) may be configured to substantially equalize braking applied to the first and second brake assemblies (120, 130) responsive to actuation of the operator (72).

## Description

### TECHNICAL FIELD

Exemplary embodiments of the present disclosure generally relate to a stroller, and more particularly, to a stroller having a brake balancer.

### BACKGROUND

In general, strollers are wheeled devices used to transport a passenger, typically a child. Some strollers may be configured to fold or collapse when not in use in order to occupy less space for transport or storage. The folding capability, although not required, may allow strollers to be transported in vehicles for deployment in various locations. As such, strollers of various types and sizes have been produced for varying uses and with various different capabilities and/or features.

Some small strollers can be very light and compact. Such light and small strollers may have a relatively small number of additional features. Meanwhile, other strollers, such as jogging strollers, tandem strollers and others, can be fairly robust, and may support a number of features.

One feature that may be employed on some strollers is a brake system. Although some light or basic models may include no brakes, and may simply move and stop completely responsive to manual operator control, other models may employ brake systems of various types. Some such brake systems may include a simple foot operated, local brake at one or more wheels. Other, more complex, braking systems may be cable operated by a lever or other operator positioned at or near the handle of the stroller. A common problem that can be encountered in cable operated braking systems is that the brakes operate in an unbalanced way. That is, a brake for one wheel may engage before the brake for another wheel can engage. This can lead to uneven wear of brake components and/or unwieldy responses to the application of brakes during operation. Accordingly, embodiments of the present invention described herein relate to an improved brake system for a stroller having cable operated brakes.

### BRIEF SUMMARY OF SOME EXAMPLES

Some example embodiments may enable the provision of a stroller brake system that employs a brake balancer to facilitate the provision of brakes to different wheels in a balanced way.

In one example embodiment, a brake system for applying frictional braking to a mobility assembly of a stroller is provided. The brake system may include a first brake assembly, a second brake assembly, an operator and a brake balancer. The first brake assembly may be operably coupled to a first wheel of the mobility assembly and to a first cable. The second brake assembly may be operably coupled to a second wheel of the mobility assembly and to a second cable. The operator may be configured to be actuated by a user to apply tension to a third cable. The brake balancer may be operably coupled to the first and second brake assemblies and to the operator via the first, second and third cables, respectively. The brake balancer may be configured to substantially equalize braking applied to the first and second brake assemblies responsive to actuation of the operator.

In another example embodiment, a stroller is provided. The stroller may include a seat for supporting a passenger, a frame configured to support the seat, a mobility assembly operably coupled to the frame and including at least a front wheel and a pair of rear wheels, and a brake system for applying frictional braking to the mobility assembly. The brake system may include a first brake assembly, a second brake assembly, an operator and a brake balancer. The first brake assembly may be operably coupled to a first wheel of the mobility assembly and to a first cable. The second brake assembly may be operably coupled to a second wheel of the mobility assembly and to a second cable. The operator may be configured to be actuated by a user to apply tension to a third cable. The brake balancer may be operably coupled to the first and second brake assemblies and to the operator via the first, second and third cables, respectively. The brake balancer may be configured to substantially equalize braking applied to the first and second brake assemblies responsive to actuation of the operator.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a side view of a stroller employing a braking system in accordance with an example embodiment;
FIG. 2 illustrates a block diagram of a stroller brake system in accordance with an example embodiment;
FIG. 3 illustrates a front, partial cutaway view of a brake balancer in accordance with an example embodiment;
FIG. 4 illustrates the brake balancer of FIG. 3 after a balancing operation has been performed in accordance with an example embodiment; and
FIG. 5 illustrates a brake balancer having an alternative structure.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other.

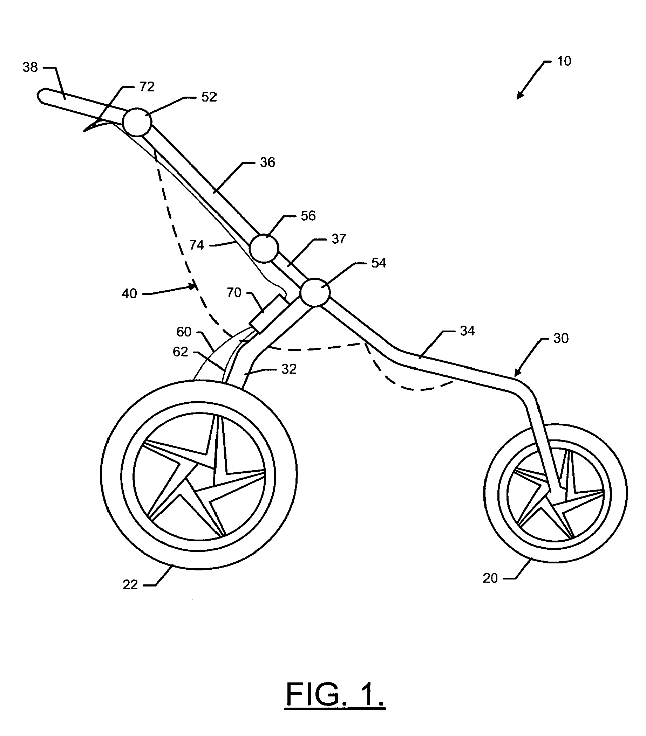

A stroller 10 of an example embodiment is shown in FIG. 1. The stroller 10 of FIG. 1 happens to be a model having three wheels. However, it should be appreciated that other structures for the stroller 10 may alternatively be employed including, for example, four wheeled models. The arrangement and positions of various frame members, wheels, seat(s), handles, accessories and other structures may be altered in accordance with many such designs. Thus, the stroller 10 of FIG. 1 should be appreciated as merely being one non-limiting example of a structure that may employ an example embodiment.

FIG. 1 illustrates a side view of the stroller 10, which may employ a brake system in accordance with an example embodiment. Of note, the specific structures and arrangements of components that form the stroller 10 of FIG. 1 are merely exemplary of one type of stroller that could employ an example embodiment. Thus, particularly the specific structures that are unrelated to the braking system of the stroller 10 should be appreciated as being merely exemplary and non-limiting.

As shown in FIG. 1, the stroller 10 may include at least a front wheel 20 and a pair of rear wheels 22 that may be operably coupled to a frame 30. In some cases, the front wheel 20 may be a single wheel (or wheel assembly) that is centrally located at a front portion of the frame 30. However, in other examples, the front wheel 20 may be one of a pair of front wheels that may be disposed on opposing sides of the frame 30 similar to the way the rear wheels 22 are disposed.

The frame 30 may be constructed of a plurality of substantially rigid frame members that may be positioned to define a receiving space therebetween. The receiving space may be provided generally above, but otherwise between the rear wheels 22. In some cases, the receiving space may also generally be positioned forward of the rear wheels. A seat 40 may be supported by the frame 30 within the receiving space to enable a child to sit therein to be transported by the stroller 10. Thus, it should be appreciated that some of the frame members shown in FIG. 1 may be duplicated on the opposite side of the seat 40 relative to the frame members that are visible in FIG. 1.

The frame 30 may include a rear strut 32 that may extend from an interior portion of the frame 30 (relative to the longitudinal ends of the frame 30) rearward toward the rear wheel 22. A front member 34 may extend from a point at which the rear strut 32 intersects the rest of the frame 30 (or a location relatively close to the point of such intersection) forward to the front wheel 20. A top member 36 may extend substantially upward and/or rearward toward a handle 38 of the stroller 10. The top member 36 may extend from the point of the intersection of the rear strut 32 with the rest of the frame 30 in some cases. However, in some cases, an extension portion 37 may be provided between the top member 36 and the point of the intersection of the rear strut 32 with the rest of the frame 30. As mentioned above, the front member 34, rear strut 32, top member 36 and extension portion 37 (if included) may be duplicated on the left side of the frame as well, since FIG. 1 only shows the right side.

In an example embodiment, one or more (or all) of the segments of the frame 30 may be operably coupled to each other or to other structural members via a rigid connection or a hinge. In this regard, FIG. 1 illustrates several examples of hinges that could be employed in connection with various example embodiments. As shown in FIG. 1, the handle 38 may be operably coupled to the top member 36 via a first hinge 52. Meanwhile, the rear strut 32 may be operably coupled to the front member 34 (and/or the extension portion 37) via a second hinge 54. If the extension portion 37 is included, the extension portion 27 may be operably coupled to the top member 36 via a third hinge 56. More or fewer hinges could be employed in other embodiments.

As one of skill in the art will appreciate, each of the hinges may be duplicated on the left side of the stroller 10 as well to create a hinge assembly about which corresponding portions of the stroller 10 can be folded. As such, operation of the first hinge 52 (and its hinge pair on the opposite side) may enable the handle 38 to be folded (e.g., pivoted, swiveled, rotated or articulated) about an axis defined by the first hinge 52. Thus, the handle 38 may be moved up or down. Operation of the third hinge 56 may enable the top member 36 to be folded toward the front member 30 about an axis defined by the third hinge 56. Thus, the top member 36 and handle 38 may be folded forward toward the front member 34. The rear strut 32 may also be folded about an axis defined by the second hinge 54 so that the rear strut 32 can move closer to the forward member 34 (or vice versa).

In an example embodiment, the rear wheels 22 may each have a corresponding brake assembly disposed proximate thereto. The brake assembly may be cable operated such that the application of pressure onto a cable that interfaces with the brake assembly causes the brake assembly to be activated to apply braking forces at each respective one of the rear wheels 22. In an example embodiment, a first cable 60 may be operably coupled with a first brake assembly (not shown in FIG. 1) that is associated with one of the rear wheels 22, and a second cable 62 may be operably coupled with a second brake assembly (not shown in FIG. 1). The first and second cables 60 and 62 may be routed from their respective brake assemblies to a common brake balancer 70 of an example embodiment. The brake balancer 70 may also be operably coupled to a lever or operator 72 that may be positioned at or near the handle 38 via a third cable 74.

In some embodiments, the brake balancer 70 may be affixed or otherwise operably coupled to one of the members of the frame 30. Regardless of its physical location, the actuation of the operator 72 may provide tension on the third cable 74, which tension may be communicated to the brake balancer 70. The brake balancer 70 may then operate to apply tension to both the first and second cables 60 and 62 for balanced application of braking forces at their respective brake assemblies.

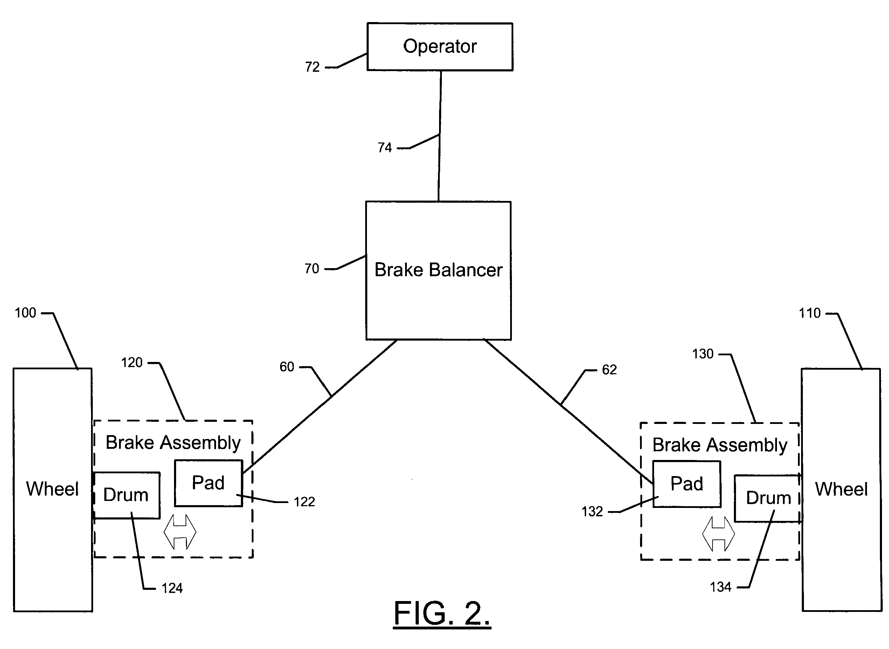

FIG. 2 shows a block diagram of components of the stroller 10 to facilitate a description of an example embodiment employing a common frictional brake assembly. As shown in FIG. 2, the operator 72 may be operably coupled to the brake balancer 70 via the third cable 74. As mentioned above, tension applied by actuation of the operator is communicated to the brake balancer 70. Thereafter, the brake balancer 70 may provide for balanced application of braking forces at a first wheel 100 and a second wheel 110 (which may be examples of the rear wheels 22). The braking forces may be applied via a first brake assembly 120 and a second brake assembly 130. The first and second brake assemblies 120 and 130 may each be frictional braking systems that employ a movable frictionally engageable member that is movable to frictionally engage a base member.

The first brake assembly 120 may include one or more brake pads or shoes (e.g., pad 122) that may be moveable responsive to the provision of cable tension via the first cable 60 and the brake balancer 70. In an example embodiment, the pad 122 may be mounted on a lever that pivots responsive to the application of tension to the first cable 60. The pivoting of the lever may draw or otherwise move the pad 122 toward contact with a brake drum 124 that may rotate with the first wheel 100. The amount of movement of the pad 122 may depend on the amount of tension applied through the first cable 60 (ultimately based on the amount of tension applied at the operator 72). As the pad 122 begins to engage the brake drum 124, if the first wheel 100 is turning, friction is created between the pad 122 and the brake drum 124 to slow the rotation of the first wheel 100. When sufficient friction is applied to stop the brake drum 124 from rotating, the corresponding rotation of the first wheel 100 is also stopped. As will be described in greater detail below, the brake balancer 70 is configured to coordinate the actions described above with those of the second brake assembly 130.

Similarly, the second brake assembly 130 may include one or more brake pads or shoes (e.g., pad 132) that may be moveable responsive to the provision of cable tension via the second cable 62 and the brake balancer 70. As described above, the pad 132 may be mounted on a lever that pivots responsive to the application of tension to the second cable 62. The pivoting of the lever may draw or otherwise move the pad 132 toward contact with a brake drum 134 that may rotate with the second wheel 110. The amount of movement of the pad 132 may depend on the amount of tension applied through the second cable 62 (ultimately based on the amount of tension applied at the operator 72). As the pad 132 begins to engage the brake drum 134, if the second wheel 110 is turning, friction is created between the pad 132 and the brake drum 134 to slow the rotation of the second wheel 110. When sufficient friction is applied to stop the brake drum 134 from rotating, the corresponding rotation of the second wheel 110 is also stopped. Again, the brake balancer 70 is configured to coordinate this operation with that of the first brake assembly 120.

Of note, although a drum brake is described above as an example of the first and second brake assemblies 120 and 130, alternative embodiments may employ a disc brake. For embodiments in which the brake assembly is a disc brake, the brake drum may be replaced with a disc or other rotor, and the pad may be replaced with a pad assembly including pads that are pinched into frictional contact with the disc (e.g., on opposing sides thereof). Regardless of whether the frictional brake assembly is a drum brake or disc brake, the amount of tension applied via the first and second cables 60 and 62 is generally proportionally to the amount of corresponding movement of the pad, shoe or other frictionally engageable member that engages the disc or drum to apply the friction that provides braking.

The fact that application of tension through the first and second cables 60 and 62 causes movement of the movable frictionally engageable member (e.g., a pad or shoe) generally leaves braking systems like the system of FIG. 2 (without the brake balancer 70) susceptible to uneven application of braking. Such systems require very accurate initial adjustment of the positions of the frictionally engageable members to their corresponding base member (e.g., the disc or drum) so that movement of the frictionally engageable members responsive to actuation of the operator causes the movable frictionally engageable member on each side to engage its respective base member at approximately the same time. However, even with very accurate initial settings, these systems can lose calibration over time and the brake systems components may get out of balance. Thus, for example, when the operator is actuated, one brake pad may engage its respective drum before the other pad does, or with a different amount of frictional engagement. Uneven break pad wearing can then occur, or uneven braking can occur, and both the useful life and satisfaction of the user may be diminished.

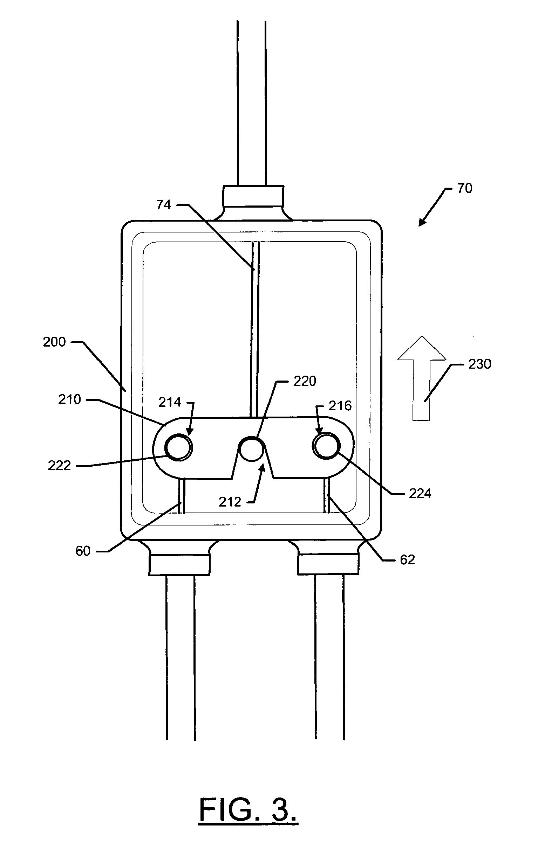

To address this issue, some example embodiments may employ the brake balancer 70. The brake balancer 70 may provide dynamic calibration of brake system components to ensure that the braking forces and frictional engagement at each respective different side or wheel is substantially equal or balanced. Essentially, the brake balancer 70 provides a self-adjusting brake assembly that self-adjusts to ensure that engagement between the movable frictionally engageable member on each side with its respective base member is approximately equal or balanced. Operation of the brake balancer 70 in accordance with one example embodiment will now be described in reference to FIG. 3, which illustrates one example structure for providing the brake balancer 70.

As shown in FIG. 3, the brake balancer 70 may include a housing 200 that may partially or fully contain the components of the brake balancer 70. The housing 200 may therefore include sidewalls on each of six sides thereof to define the external structure of the brake balancer 70. Internally, the sidewalls or other structures therein may be formed to provide a guide slot or other free space inside which equalizer bar 210 may be provided. The housing 200 and/or the equalizer bar 210 may be made of metal, plastic or other rigid materials.

In the example of FIG. 3, the equalizer bar 210 is provided as a substantially flat, or plate-like component that has a relatively thin profile in the depth dimension. The equalizer bar 210 has a substantially larger length dimension than its width dimension. However, other structures and shapes are also possible (e.g., a cylindrical shape, rectangular shape, etc.). As shown in FIG. 3, the equalizer bar 210 may include at least three coupling portions that may be formed as cutout regions from the material of the equalizer bar 210. The coupling portions may be fully enclosed (e.g., circular shaped orifices) or may be only partially enclosed. In an example embodiment, a first coupling portion 212 may be a partially enclosed cutout region that is provided approximately at a center of the equalizer bar 210. Meanwhile, a second coupling portion 214 and a third coupling portion 216 may each be provided equidistant from the first coupling portion 212 on opposing sides thereof. Furthermore, in some cases, the second and third coupling portions 214 and 216 may be proximate to opposing longitudinal ends of the equalizer bar 210, and may be fully enclosed cutout regions.

The equalizer bar 210 may be operably coupled to the third cable 74 at the first coupling portion 212 by being tied, attached or otherwise pivotally coupled to the equalizer bar 210 at the first coupling portion 212. In an example embodiment, the third cable 74 may terminate at a first pivot member 220 that fits in or is otherwise operably coupled to the first coupling portion 212. Similarly, the first cable 60 may terminate at a second pivot member 222, and the second cable 62 may terminate at a third pivot member 224. In some cases, the first, second and/or third pivot members 220, 222 and 224 may each be a cylindrical shaped component that enables the equalizer bar 210 to pivotally engage each of the first, second and third pivot members, 220, 222 and 224 at respective ones of the first, second and third coupling portions 212, 214 and 216.

Movement of the third cable 74 in the direction of arrow 230 (e.g., responsive to actuation of the operator 72) may pull the first pivot member 220 also in the direction of arrow 230. The movement of the first pivot member 220 may carry the equalizer bar 210 also in the direction of arrow 230 and exert a force on each of the second and third pivot members 222 and 224 to provide tension on the first and second cables 60 and 62. As described above, the provision of tension on the first and second cables 60 and 62 may cause corresponding movement of the pads 122 and 132 toward their respective drums 124 and 134 to engage braking forces on the respective first and second wheels 100 and 110. If the equalizer bar 210 is originally in the position shown in FIG.3, the first and second cables 60 and 62 will each have substantially the same forces exerted thereon and will be carried in the direction of arrow 230 approximately the same amount.

As mentioned above, if the distances between the pads 122 and 132 and their respective drums 124 and 134 are not exactly equal, one of the pads 122 or 132 will engage its respective drum 124 or 134 before the other. If the brake balancer 70 was not employed, or the equalizer bar 210 was not capable of pivoting about the first pivot member 220, uneven operation of the brake assemblies would routinely occur when the brakes are actuated. In an extreme case, only one pad will engage its respective drum at all. In either case, uneven wear and/or breaking may occur.

By employing the brake balancer 70, in a case where the pad 122 is closer to the drum 124 than pad 132 is to drum 134, the engagement of the pad 122 with the drum 124 will case frictional engagement that will slow (or prevent) further movement of the first cable 60 as the equalizer bar 210 advances in the direction of arrow 230. However, since the pad 132 is not yet engaged with drum 134, no such frictional engagement slows (or prevents) further movement of the second cable 62. Thus, as the equalizer bar 210 advances, the second pivot member 222 stops or at least moves more slowly than the third pivot member 224 until the pad 132 engages the drum 134. The equalizer bar 210 therefore can continue to advance while pivoting occurs about the first pivot member 220 until a substantially equal force is applied to both the second and third pivot members 222 and 224.

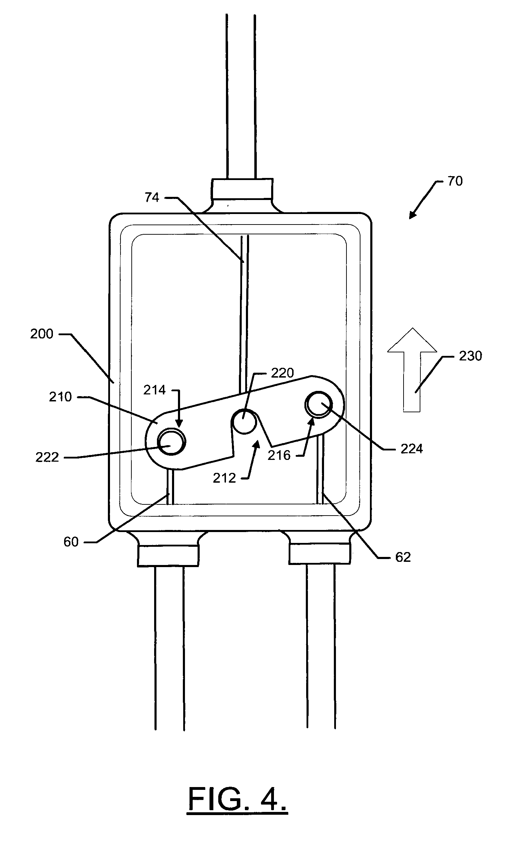

A result of the sequence described above is shown in FIG. 4. However, it should be appreciated that the same sequence could be repeated and result in an opposite configuration (i.e., with the second pivot member 222 advancing further along the direction of arrow 230 than the third pivot member 224) if the pad 132 happened to be closer to the drum 134 in the second brake assembly 130 than the pad 122 is to the drum 124 in the first brake assembly 120. Accordingly, the brake balancer 70 can automatically adjust itself to respond to changes that might occur (e.g., bumping, rubbing or other changes to pad/drum relative positioning) in relation to brake assembly configurations.

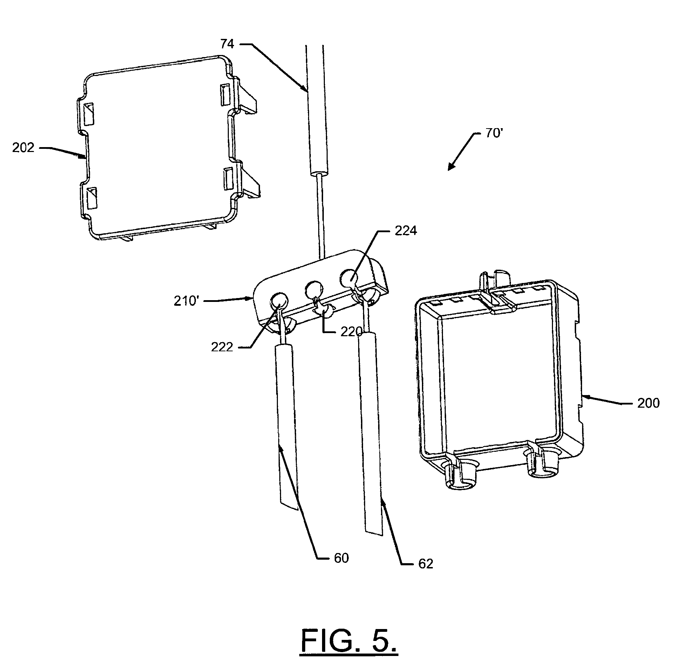

The brake balancer 70 of FIGS. 3 and 4 is shown including the equalizer bar 210 as a substantially flat or plate-like member. However, alternative structures could be employed in some embodiments. In this regard, as shown in FIG. 5, the equalizer bar 210' of an alternate brake balancer 70' could alternatively be provided as an assembly having a depth dimension that is slightly less than the depth of the housing 200. Thus, proper alignment of the equalizer bar 210' may be maintained since the interior of the housing 200 may act as a guide slot in which the equalizer bar 210' moves up and down and/or rotates about the first pivot member 220. The equalizer bar 210' of this example may include two parallel plates at opposing front and back portions of the equalizer bar 210'. The two parallel plates may be separated by a third plate connecting the two parallel plates along corresponding longitudinal edges thereof. Slots may be formed in the plates and the connecting plate to accommodate the first pivot member 220, the second pivot member 222 and the third pivot member 224. A cover 202 may be provided to interface with the housing 200 to enclose the assembly.

Thus, according to an example embodiment, a brake system for applying frictional braking to a mobility assembly of a stroller may be provided. The brake system may include a first brake assembly, a second brake assembly, an operator and a brake balancer. The first brake assembly may be operably coupled to a first wheel of the mobility assembly and to a first cable. The second brake assembly may be operably coupled to a second wheel of the mobility assembly and to a second cable. The operator may be configured to be actuated by a user to apply tension to a third cable. The brake balancer may be operably coupled to the first and second brake assemblies and to the operator via the first, second and third cables, respectively. The brake balancer may be configured to substantially equalize braking applied to the first and second brake assemblies responsive to actuation of the operator.

In some embodiments, the features described above may be augmented or modified, or additional features may be added. These augmentations, modifications and additions may be optional and may be provided in any combination. Thus, although some example modifications, augmentations and additions are listed below, it should be appreciated that any of the modifications, augmentations and additions could be implemented individually or in combination with one or more, or even all of the other modifications, augmentations and additions that are listed. As such, for example, the operator may be provided proximate to a handle of the stroller. In an example embodiment, the first and second brake assemblies may each include a movable frictionally engageable member that is movable to frictionally engage a base member provided at a corresponding wheel of the mobility assembly. The brake balancer may automatically adjust braking forces applied via the first and second brake assemblies responsive to respective distances between the movable frictionally engageable member and the base member of each respective one of the first and second brake assemblies being unequal. In some cases, the first and second brake assemblies each include a pad and a drum spaced apart from each other by respective distances and configured to frictionally engage each other responsive to actuation of the operator. In such an example, the brake balancer may automatically adjust braking forces applied via the first and second brake assemblies responsive to the respective distances being unequal. In some embodiments, the brake balancer may include an equalizer bar pivotally coupled to the third cable at a first coupling portion. The first coupling portion may be disposed proximate to a longitudinal midpoint of the equalizer bar. In some cases, the brake balancer further includes a second coupling portion operably coupled to the first cable and a third coupling portion operably coupled to the second cable. The second and third coupling portions may be disposed proximate to opposing longitudinal ends of the equalizer bar. In an example embodiment, the brake balancer may include a housing defining a guide slot inside which the equalizer bar is enabled to move responsive to actuation of the operator. In some cases, in response to the first brake assembly achieving frictional engagement prior to the second brake assembly achieving frictional engagement, the brake balancer may be configured to enable the equalizer bar to pivot about the first coupling portion to enable equalization of tension applied via the second and third coupling portions by enabling the third coupling portion to travel equal to or farther than the second coupling portion responsive to movement of the first coupling portion. In some cases, tension applied to the third cable may be communicated to the equalizer bar, and the equalizer bar pivotally engages the third cable to enable the tension to be communicated substantially equally to both the first and second cables based on different amounts of movement of the first and second cables, respectively. In an example embodiment, the different amounts of movement of the first and second cables is achievable based on pivoting of the equalizer bar to provide different amounts of movement of the second and third coupling portions based on the movement of the first coupling portion.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A brake system for applying frictional braking to a mobility assembly of a stroller, the brake system comprising:
a first brake assembly operably coupled to a first wheel of the mobility assembly and to a first cable;
a second brake assembly operably coupled to a second wheel of the mobility assembly and to a second cable;
an operator configured to be actuated by a user to apply tension to a third cable, and
a brake balancer operably coupled to the first and second brake assemblies and to the operator via the first, second and third cables, respectively, the brake balancer being configured to substantially equalize braking applied to the first and second brake assemblies responsive to actuation of the operator.

2. The brake system of claim 1, wherein the operator is provided proximate to a handle of the stroller.

3. The brake system of claim 1, wherein the first and second brake assemblies each include a movable frictionally engageable member that is movable to frictionally engage a base member provided at a corresponding wheel of the mobility assembly, and wherein the brake balancer automatically adjusts braking forces applied via the first and second brake assemblies responsive to respective distances between the movable frictionally engageable member and the base member of each respective one of the first and second brake assemblies being unequal.

4. The brake system of claim 1, wherein the first and second brake assemblies each include a pad and a drum spaced apart from each other by respective distances and configured to frictionally engage each other responsive to actuation of the operator, and wherein the brake balancer automatically adjusts braking forces applied via the first and second brake assemblies responsive to the respective distances being unequal.

5. The brake system of claim 1, wherein the brake balancer comprises an equalizer bar pivotally coupled to the third cable at a first coupling portion, the first coupling portion being disposed proximate to a longitudinal midpoint of the equalizer bar.

6. The brake system of claim 5, wherein the brake balancer further comprises a second coupling portion operably coupled to the first cable and a third coupling portion operably coupled to the second cable, and wherein the second and third coupling portions are disposed proximate to opposing longitudinal ends of the equalizer bar.

7. The brake system of claim 6, wherein the brake balancer comprises a housing defining a guide slot inside which the equalizer bar is enabled to move responsive to actuation of the operator.

8. The brake system of claim 6, wherein, in response to the first brake assembly achieving frictional engagement prior to the second brake assembly achieving frictional engagement, the brake balancer is configured to enable the equalizer bar to pivot about the first coupling portion to enable equalization of tension applied via the second and third coupling portions by enabling the third coupling portion to travel equal to or farther than the second coupling portion responsive to movement of the first coupling portion.

9. The brake system of claim 6, wherein tension applied to the third cable is communicated to the equalizer bar, and wherein the equalizer bar pivotally engages the third cable to enable the tension to be communicated substantially equally to both the first and second cables based on different amounts of movement of the first and second cables, respectively.

10. The brake system of claim 9, wherein the different amounts of movement of the first and second cables is enabled by pivoting of the equalizer bar to provide different amounts of movement of the second and third coupling portions based on the movement of the first coupling portion.

11. A stroller comprising:
a seat for supporting a passenger;
a frame configured to support the seat;
a mobility assembly including at least a front wheel and a pair of rear wheels, the mobility assembly being operably coupled to the frame; and
a brake system according to any of claims 1 to 10.
